# EUROPÄISCHE PATENTSCHRIFT

(11) **EP 1 994 371 B1**
(45) Veröffentlichungstag und Bekanntmachung des Hinweises auf die Patenterteilung: **07.04.2010**
(21) Anmeldenummer: 07704311.5
(22) Anmeldetag: 01.02.2007
(51) Int. Cl.: G01F 1/688, G01P 5/10, F01D 25/12

(54) **STRÖMUNGSMESSVORRICHTUNG ZUR BESTIMMUNG EINER STRÖMUNGSRICHTUNG**
FLOWMETER FOR DETERMINING A FLOW DIRECTION
DISPOSITIF DE MESURE D'ÉCOULEMENT POUR DÉTERMINER UN SENS D'ÉCOULEMENT

(30) Priorität: 16.03.2006 DE 102006012229
(43) Veröffentlichungstag der Anmeldung: 26.11.2008
(73) Patentinhaber: SIEMENS AKTIENGESELLSCHAFT, 80333 München (DE)
(72) Erfinder: BOSSELMANN, Thomas, 91080 Marloffstein (DE); WILLSCH, Michael, 07745 Jena (DE)
(86) Internationale Anmeldenummer: PCT/EP2007/050990
(87) Internationale Veröffentlichungsnummer: WO 2007/104605

(56) Entgegenhaltungen:
- DE-A1- 10 251 701
- GB-A- 2 079 470
- JEWART ET AL: "X-probe flow sensor using self-powered active fiber Bragg gratings" SENSORS AND ACTUATORS A, ELSEVIER SEQUOIA S.A., LAUSANNE, CH, Bd. 127, Nr. 1, 28. Februar 2006 (2006-02-28), Seiten 63-68, XP005296908 ISSN: 0924-4247

## Beschreibung

Die vorliegende Erfindung betrifft ein Strömungsmessvorrichtung zur Bestimmung einer Strömungsrichtung eines Fluids. Die Strömungsmessvorrichtung weist dabei ein Messelement mit mindestens zwei Lichtwellenleitern und mindestens einem zu den Lichtwellenleitern benachbart angeordneten elektrischen Heizelement, eine Steuerungseinheit und eine Auswerteeinheit auf. Ferner betrifft die Erfindung ein Verfahren zum Bestimmen einer Strömungsrichtung eines Fluids sowie eine elektrische Maschine mit der Strömungsmessvorrichtung.

In elektrischen Maschinen aller Leistungsklassen, insbesondere aber mit höherer Leistung, wird eine erhebliche Wärme entwickelt, die im Hinblick auf eine verbesserte Maschineneffizienz und/oder höherer Lebensdauer mittels kühltechnischer Maßnahmen abzuführen ist. So sind beispielsweise luftgekühlte Maschinen wie Generatoren oder Motoren, insbesondere mit Leistungen unter 300 MVA, bekannt, bei denen eine Kühlung durch einen vergleichsweise großen Luftstrom erfolgt. Dieser Luftstrom kann insbesondere durch ein zahlreiche Strömungskanäle umfassendes Leitungssystem geleitet werden (vgl. z.B. die DE 42 42 132 A1 oder die EP 0 853 370 A1). Es kann beispielsweise durch die Strömungskanäle des Leitungssystems Luft von außen nach innen durch den Stator der Maschine gepresst werden. Gleichzeitig wird jedoch vom Rotor der Maschine Luft angesaugt und von innen nach außen in umgekehrte Richtung durch den Stator gepresst. Wenn sich beide Luftströme ungünstig überlagern, kommt es innerhalb des Leitungssystems zum Strömungsstillstand und somit gegebenenfalls zu einer örtlichen Überhitzung und Beschädigung der Maschine.

Aus dem Dokument C.Jewart et al., "X-probe flow sensor using self-powered active fiber Bragg gratings", Sensors and Actuators A 127 (2006), 63-68 ist eine Anordnung bekannt, bei mittels eines Kreuzes aus zwei Faser-Bragg-Gittern eine Strömungsgeschwindigkeit ermittelt wird, wobei die Lichtwellenleiter mit den Faser-Bragg-Gittern durch hindurchgeleitetes Licht beheizt werden.

Aus der GB 2 079 470 A ist eine Möglichkeit zur Bestimmung der Fließcharakteristik eines Fluids durch ein flüssigkeitsdurchlässigen Feststoff bekannt, bei der ein Heizelement eine lokale Aufheizung des Feststoffs und Fluids bewirkt und an anderen Stellen um das Heizelement herum die Temperatur gemessen wird.

In der WO 2004/042326 A2 ist eine Strömungsmessvorrichtung zur Bestimmung einer Strömungsgeschwindigkeit eines ein Messelement der Strömungsmessvorrichtung umströmenden Fluids, wie beispielsweise eines Gasstroms, mit einem mehrere Faser-Bragg-Gitter aufweisenden Lichtwellenleiter und wenigstens einem zum Leiter benachbart angeordneten, elektrischen Heizelement angegeben. Hiermit kann aus einer Beeinflussung einer in den Lichtwellenleiter eingespeisten elektromagnetischen Welle durch die Temperatur des Leiters die Strömungsgeschwindigkeit entlang der Längserstreckung des Messelements ermittelt werden. Der Lichtwellenleiter ist über das elektrische Heizelement mit konstanter Wärmebeaufschlagung beheizbar, wobei sich am Messelement eine Temperaturverteilung in Längserstreckung entsprechend der lokalen Strömungsgeschwindigkeit ergibt. Diese Strömungsmessvorrichtung ist somit geeignet, mit nur einem einzigen Messelement eine Vielzahl von lokalen Strömungsgeschwindigkeiten zu ermitteln. Die Ermittlung der Richtung, in welche das Fluid relativ zum Messelement fließt, ist jedoch nicht möglich.

Der vorliegenden Erfindung liegt daher die Aufgabe zugrunde, eine Strömungsmessvorrichtung sowie ein Verfahren bereitzustellen, mit welchen die Strömungsrichtung eines Fluids ermittelbar ist, als auch eine elektrische Maschine anzugeben, bei welcher die Strömungsrichtung eines Kühlfluids überwacht werden kann.

Zur Lösung der Aufgabe wird eine Strömungsmessvorrichtung entsprechend den Merkmalen des unabhängigen Patentanspruchs 1 angegeben.

Bei der erfindungsgemäßen Strömungsmessvorrichtung handelt es sich um eine Strömungsmessvorrichtung zur Bestimmung einer Strömungsrichtung eines Fluids, aufweisend
- ein von dem Fluid umströmbares Messelement mit mindestens zwei Lichtwellenleitern und mindestens einem zu den Lichtwellenleitern benachbart angeordneten elektrischen Heizelement, wobei
   - die Lichtwellenleiter über jeweils einen vom mindestens einen Heizelementen zu den jeweiligen Lichtwellenleitern gerichteten Wärmestrom mit Wärme beaufschlagbar ist,
   - die Richtungen der Wärmeströme zumindest anteilig entgegengesetzt sind,
   - die einzelnen Wärmeströme unterschiedlich stark mit der Strömungsrichtung des Fluids korreliert sind, und
   - wenigstens eine in die Lichtwellenleiter einkoppelbare elektromagnetische Welle entsprechend der jeweiligen Temperatur der Lichtwellenleiter beeinflussbar ist,
- eine Steuerungseinheit, mit welcher dem zumindest einen Heizelement elektrischen Leistung zuführbar ist, und
- eine Auswerteeinheit, mit welcher die von den einzelnen Wärmeströmen ausgehende Temperaturbeeinflussung der mindestens einen elektromagnetischen Welle auswertbar und die Strömungsrichtung des Fluids bestimmbar ist.

Das Messelement, das in seine Längserstreckung vorzugsweise senkrecht zur Strömungsrichtung des Fluids in diesem angeordnet ist, weist über den Umfang seines Querschnittes, welcher insbesondere kreisförmig ist, unterschiedliche örtliche Strömungsverhältnisse auf. So erfolgt der Wärmetransport über die Oberfläche des Messelements aufgrund der örtlich unterschiedlichen Strömungsgeschwindigkeiten des Fluids nicht gleichmäβig über den Umfang des Querschnitts. Im Messelement stellt sich aus diesem Grunde bei konstanter Leistungsbeaufschlagung des mindestens einen Heizelements betragsmäßig jeweils ein unterschiedlicher Wärmestrom in Richtung der Lichtwellenleiter ein, welche abhängig von der Position der Lichtwellenleiter im Messelement sind. Abhängig von der Anordnung der Lichtwellenleiter relativ zur Strömungsrichtung können sich somit am jeweiligen Ort der Lichtwellenleiter unterschiedliche Temperaturen einstellen. Aus der Bestimmung der entsprechenden Temperaturunterschiede kann schließlich auf die Strömungsrichtung des das Messelement umströmenden Fluids geschlossen werden.

Vorteilhafte Ausgestaltungen der Strömungsmessvorrichtung gemäß der Erfindung ergeben sich aus den von Anspruch 1 abhängigen Ansprüchen.

So ist es günstig, wenn die Lichtwellenleiter jeweils zumindest ein Faser-Bragg-Gitter umfassen und die wenigstens eine in die Lichtwellenleiter einkoppelbare elektromagnetische Welle entsprechend der jeweiligen Temperatur der Lichtwellenleiter am Ort der mindestens zwei Faser-Bragg-Gitters beeinflussbar ist. Ein solcher Sensortyp zeichnet sich durch seine besondere Multiplexfähigkeit aus, so dass auf einfache Weise ein Sensornetzwerk realisiert werden kann. Ein weiterer Vorteil der Faser-Bragg-Gitter-Technologie ist die Möglichkeit einer praktisch punktförmigen, also einer lokal sehr eng begrenzten Messung. Damit ist es möglich, bei Notwendigkeit einer höheren, insbesondere ortsaufgelösten Messgenauigkeit entlang des Messelements mehrere Faser-Bragg-Gitter nahe beieinander in den jeweiligen Lichtwellenleitern nacheinander anzuordnen.

Zur besseren Unterscheidbarkeit haben die in einem Lichtwellenleiter angeordneten Faser-Bragg-Gitter vorzugsweise jeweils eine voneinander verschiedene Schwerpunktwellenlänge. In jedem Faser-Bragg-Gitter wird von der mindestens einen eingespeisten elektromagnetischen Welle ein durch die jeweilige Schwerpunktswellenlänge bestimmter Anteil zurückreflektiert. Die Schwerpunktswellenlänge ändert sich mit der am Messort herrschenden Einflussgröße, hier insbesondere der Temperatur des Lichtwellenleiters. Diese Veränderung im Wellenlängengehalt (oder Wellenlängenspektrum) des jeweiligen zurückreflektierten Teils der eingespeisten mindestens einen elektromagnetischen Welle wird als Maß für die zu erfassende Einflussgröße verwendet werden. Es ist prinzipiell aber auch möglich, den transmittierten Teil der eingespeisten mindestens einen elektromagnetischen Welle auf die Veränderung im Wellenlängenspektrum zu untersuchen. Zur Abfrage der Faser-Bragg-Gitter mittels der mindestens einen elektromagnetischen Welle kann insbesondere eine breitbandige Lichtquelle, wie beispielsweise eine LED (Leuchtdiode, engl.: Light Emitting Diode) mit einer Bandbreite von etwa 45 nm, eine SLD (Superlumineszenzdiode, engl.: Super Luminescence Diode) mit einer Bandbreite von etwa 20 nm oder ein durchstimmbarer Laser mit einer Bandbreite von etwa 100 nm, zum Einsatz kommen.

Es wird vorgeschlagen, dass das Messelement stabförmig ausgebildet ist. Vorteilhaft ist das Messelement einfach zu montieren und kann beispielsweise durch eine Öffnung in den Strömungskanal eingeführt werden. Ferner kann erreicht werden, dass mit geringem Montageaufwand eine Wartung des Messelements ermöglicht wird. Dazu werden die entsprechenden Befestigungen gelöst und das Messelement durch die Öffnung herausgezogen. Daneben kann das Messelement natürlich jede beliebige andere Form aufweisen. Beispielsweise kann das Messelement kreisförmig oder auch als archimedische Spirale ausgebildet sein

In einer weiteren Ausgestaltung wird vorgeschlagen, dass das Messelement elastisch ist. So kann vorteilhaft das Messelement je nach Einsatz kurzfristig vorgeformt werden, wodurch die Anzahl der verschiedenen Messelementformen reduziert werden kann. Kosten für Lagerhaltung können eingespart werden.

Es ist günstig, wenn das mindestens eine Heizelement aus Metall gebildet ist. Somit ist eine gleichmäßige Erwärmung längs der Heizelemente gewährleistet.

Weiterhin wird vorgeschlagen, dass das mindestens eine Heizelement durch eine gemeinsame elektrisch leitfähige Beschichtung der Lichtwellenleiter gebildet ist, wobei die Lichtwellenleiter in Längsrichtung in Kontakt sind. So kann die Bauform des Messelements weiter vereinfacht werden. Das Heizelement kann so auf einfache Weise jeweils einstückig mit den miteinander in Kontakt stehenden Leitern verbunden sein, so dass neben einer kostengünstigen Herstellung auch eine Schutzfunktion der Leiter durch die Heizelemente erreicht werden kann. Die leitfähige Beschichtung kann beispielsweise aus einem Metall wie Wolfram oder auch aus einer Legierung wie beispielsweise Stahl oder dergleichen gebildet sein.

Es wird ferner vorgeschlagen, dass das mindestens eine Heizelement einen konstanten spezifischen elektrischen Widerstand aufweist. So kann vorteilhaft erreicht werden, dass das Messelement über seine Längserstreckung gleichmäßig mit Wärme beaufschlagt wird. Unter spezifischem elektrischem Widerstand ist im Rahmen dieser Anmeldung der elektrische Widerstand pro Längeneinheit zu verstehen.

Darüber hinaus wird vorgeschlagen, dass der spezifische Widerstand im Betriebstemperaturbereich weitgehend temperaturunabhängig ist. So kann erreicht werden, dass die jeweilige vom mindestens einen Heizelement in Richtung der Lichtwellenleiter gerichtete Wärmezufuhr entlang der Längserstreckung des Messelements im Wesentlichen unabhängig von der aktuellen lokalen Temperatur ist. Die Messgenauigkeit sowie auch die Zuverlässigkeit der Messung kann erhöht werden. Dazu kann das mindestens eine Heizelement beispielsweise aus einem Werkstoff wie Konstantan oder dergleichen gebildet sein.

In einer vorteilhaften Weiterbildung wird vorgeschlagen, dass das Messelement eine Ummantelung aufweist. Das Messelement kann so beispielsweise gegen eine chemische Beanspruchung geschützt werden. Darüber hinaus ermöglicht die Ummantelung einen mechanischen Schutz, beispielsweise während der Montage.

Es wird ferner vorgeschlagen, dass die Ummantelung aus einem keramischen Werkstoff besteht. Mit der keramischen Ummantelung kann vorteilhaft ein Messelement für eine hohe Temperaturbeanspruchung gebildet werden.

Daneben wird vorgeschlagen, dass die Ummantelung durch eine Metallhülse gebildet ist. So kann vorteilhaft das Messelement beispielsweise gegen eine elektrostatische Aufladung geschützt werden, indem die Metallhülse mit einem Erdpotential verbindbar ist.

Darüber hinaus wird vorgeschlagen, dass die Ummantelung (8) zugleich das mindestens eine Heizelement (6, 7) aufweist. Bauteile und Kosten können weiter reduziert werden.

Zur weiteren Lösung der Aufgabe wird ein Verfahren entsprechend den Merkmalen des unabhängigen Anspruchs 12 angegeben.

Bei dem erfindungsgemäßen Verfahren handelt es sich um ein Verfahren zum Bestimmen einer Strömungsrichtung eines Fluids mit einer Strömungsmessvorrichtung, wobei
- mindestens eine elektromagnetische Welle in mindestens zwei Lichtwellenleiter eines vom Fluid umströmten Messelements eingekoppelt wird,
- zumindest einem Heizelement des Messelements derart elektrischen Leistung zugeführt wird, dass
   - die Lichtwellenleiter von den Heizelementen mit Wärme beaufschlagt und
   - die mindestens eine elektromagnetische Welle in Abhängigkeit von der unterschiedlichen lokalen Temperatur in den zumindest zwei Lichtwellenleitern unterschiedlich stark beeinflusst wird,
- die unterschiedlichen Beeinflussungen der mindestens einen elektromagnetischen Welle ermittelt und daraus die Strömungsrichtung des Fluids senkrecht zur Längserstreckung des Messelements bestimmt wird.

Bei dem erfindungsgemäßen Verfahren ergeben sich die vorstehend für die erfindungsgemäße Strömungsmessvorrichtung erläuterten Vorteile.

So ist es auch günstig, wenn die Lichtwellenleiter jeweils mindestens ein Faser-Bragg-Gitter umfassen und die mindestens eine elektromagnetische Welle in Abhängigkeit von den unterschiedlichen, lokalen Temperaturen am Ort des jeweiligen mindestens einen Faser-Bragg-Gitters beeinflusst wird.

Darüber hinaus wird vorgeschlagen, dass die mindestens eine elektromagnetische Welle durch mindestens einen elektromagnetischen Impuls gebildet ist. Vorteilhaft kann Energie eingespart sowie die Messgenauigkeit erhöht werden. Der elektromagnetische Impuls kann beispielsweise durch einen gepulsten Laser erzeugt werden, der über geeignete bekannte Kopplungsmittel in die Lichtwellenleiter eingekoppelt wird.

Ferner wird vorgeschlagen, dass das Messelement in seiner Längserstreckung durch das mindestens eine Heizelement erwärmt wird. Aus einer Temperaturvariation längs des Messelementes aufgrund der Fluidströmung kann vorteilhaft auch die Strömungsgeschwindigkeit entlang des Messelementes ermittelt werden.

Vorteilhaft ist, dass das mindestens eine Heizelement mit einer konstanten elektrischen Leistung beaufschlagt wird. Insbesondere bei einem über die Längserstreckung des Messelements konstanten Widerstandsverlauf kann somit gemäß dem ohmschen Gesetz jeweils eine konstante Wärmebeaufschlagung erreicht werden. Dies kann mittels Gleichstrom oder auch Wechselstrom erfolgen. Insbesondere kann durch Variation der Wechselstromfrequenz die Heizwirkung des mindestens einen Heizelements beeinflusst werden, wenn sich die Frequenz in einen Bereich bewegt, in dem Stromverdrängungseffekte wirksam werden.

In einer vorteilhaften Weiterbildung des erfindungsgemäßen Verfahrens wird vorgeschlagen, dass mehrere Messungen mit unterschiedlicher Leistungsbeaufschlagung durchgeführt werden. So kann die Messgenauigkeit weiter erhöht werden.

Weiterhin wird vorgeschlagen, dass als Fluid ein Gas, insbesondere Luft, oder eine Flüssigkeit, insbesondere Wasser oder flüssiger Stickstoff, zur Kühlung einer elektrischen Maschine, insbesondere eines Generators oder eines Motors, verwendet wird. Das Messelement gemäß der erfindungsgemäßen Strömungsmessvorrichtung kann dabei kostengünstig an die physikalischen und/oder chemischen Anforderungen im Strömungskanal einer Kühleinrichtung des Generators bzw. des Motors angepasst werden. Eine genaue Messung einer Strömungsverteilung im Querschnitt eines Strömungskanals kann zudem ebenfalls erreicht werden.

Ferner wird zur weiteren Lösung der Aufgabe mit der Erfindung eine elektrische Maschine mit
- einem drehbar gelagerten Läufer,
- einem zugeordneten, ortsfesten Stator in einem Maschinengehäuse,
- einer Einrichtung zur Kühlung von Teilen mittels eines Fluids innerhalb des Maschinengehäuses, wobei die Kühleinrichtung ein Leitungssystem enthält, und
- einer erfindungsgemäßen Strömungsmessvorrichtung vorgeschlagen.

Dabei ist ein in einem Strömungskanal des Leitungssystems angeordnetes Messelement der Strömungsmessvorrichtung zur Messung der Strömungsrichtung des Fluids im Strömungskanal vorgesehen.

Bei der erfindungsgemäßen elektrischen Maschine ergeben sich die vorstehend für die erfindungsgemäße Strömungsmessvorrichtung erläuterten Vorteile.

Mit der erfindungsgemäßen Strömungsmessvorrichtung kann eine effiziente Kühlung der Maschine erreicht werden, indem in den Strömungskanälen der Kühleinrichtung die Strömungsrichtung des Kühlfluids, wie beispielsweise Luft, überwacht wird. Ein auftretender Strömungsstillstand durch ungünstig überlagerte Strömungen kann dabei früh genug erkannt werden, so dass geeignete Maßnahmen eingeleitet werden können, um eine örtlichen Überhitzung und Beschädigung der Maschine zu vermeiden. So kann die Zuverlässigkeit eines Betriebs der Strömungsmaschine erhöht werden.

Es wird vorgeschlagen, dass das Messelement radial zum Querschnitt des Strömungskanals angeordnet ist. Vorteilhaft kann dabei mit mehreren nacheinander angeordneten Faser-Bragg-Gittern die Strömungsrichtung in Abhängigkeit des Radius des Strömungskanalquerschnitts ermittelt werden. Selbstverständlich können im Strömungskanal auch mehrere Messelemente vorgesehen sein, um die Strömurigsrichtung an unterschiedlichen Umfangspositionen des Strömungskanals ermitteln zu können.

Es wird ferner vorgeschlagen, dass im Strömungskanal axial beabstandet mehrere Messelemente angeordnet sind. So können vorteilhaft axiale Änderungen der Strömungsrichtung erfasst und ausgewertet werden. Es können auch mehrere unterschiedlich geformte Messelemente verwendet werden, um die gewünschten Informationen über den Strömungsverlauf zu erhalten. So können beispielsweise radiale, stabförmige Messelemente mit entlang einer Kreislinie im Strömungskanal angeordneten Messelementen kombiniert werden. Insbesondere wird vorgeschlagen, dass die Messelemente gemäß dem erfindungsgemäßen Verfahren betrieben werden.

Bevorzugte, jedoch keinesfalls einschränkende Ausführungsbeispiele der Erfindung werden nunmehr anhand der Zeichnung näher erläutert. Zur Verdeutlichung ist die Zeichnung nicht maßstäblich ausgeführt, und gewisse Aspekte sind schematisiert dargestellt. Im Einzelnen zeigen die
- Figur 1: eine Seitenansicht eines Messelements der erfin- dungsgemäßen Strömungsmessvorrichtung in stabförmi- ger Ausführung mit einem Anschlussstecker an einem Ende,
- Figur 2: einen Schnitt durch eine Ausgestaltung eines Mess- elements mit einem Heizleiter sowie zwei parallel dazu angeordneten Lichtwellenleitern,
- Figur 3: einen Schnitt durch eine Ausgestaltung eines Mess- elements mit zwei Heizleitern sowie zwei parallel dazu angeordneten Lichtwellenleitern,
- Figur 4: einen Schnitt durch eine Ausgestaltung eines Mess- elements mit einem Heizleiter sowie vier parallel dazu angeordneten Lichtwellenleitern,
- Figur 5: einen Schnitt durch eine weitere Ausgestaltung eines Messelements mit einem zwei Lichtwellenleiter umgebenden Heizelement,
- Figur 6: einen Schnitt durch eine Ausgestaltung eines Mess- elements mit zwei parallel angeordneten und von je- weils einem Heizelement umgebenden Lichtwellenlei- tern,
- Figur 7: einen Schnitt durch eine weitere Ausgestaltung ei- nes Messelements mit einem direkt auf den Oberflä- chen zweier sich berührenden Lichtwellenleiter auf- gebrachten Heizelement,
- Figur 8: eine Prinzipschaltbild einer Ausführungsform der erfindungsgemäßen Strömungsmessvorrichtung mit dem Messelement gemäß Figur 2,
- Figur 9: eine Prinzipschaltbild einer Ausführungsform der erfindungsgemäßen Strömungsmessvorrichtung mit dem Messelement gemäß Figur 3
- Figur 10: eine Prinzipschaltbild einer Ausführungsform der erfindungsgemäßen Strömungsmessvorrichtung mit dem Messelement gemäß Figur 4
- Figur 11: eine Prinzipschaltbild einer Ausführungsform der erfindungsgemäßen Strömungsmessvorrichtung mit dem Messelement gemäß Figur 6
- Figur 12: eine Prinzipschaltbild einer Ausführungsform der erfindungsgemäßen Strömungsmessvorrichtung mit dem Messelement gemäß Figur 5 oder 7
- Figur 13: Querschnitt eines Strömungskanals einer Kühlein- richtung mit einem Messelement der erfindungsgemä- ßen Strömungsmessvorrichtung,
- Figur 14: einen Schnitt durch einen Generator mit mehreren Messelementen der erfindungsgemäßen Strömungsmess- vorrichtung.

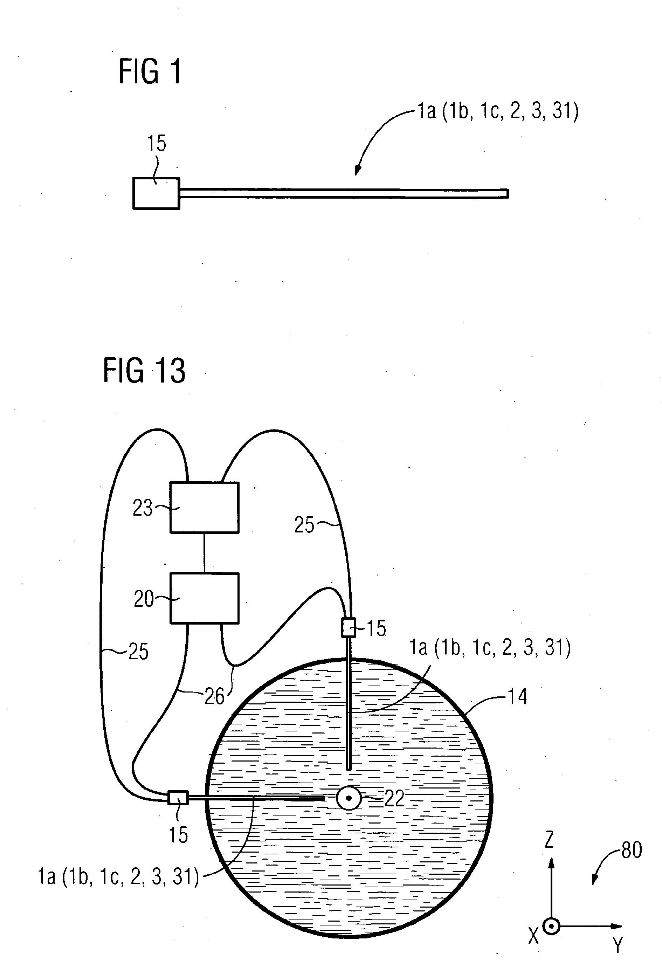

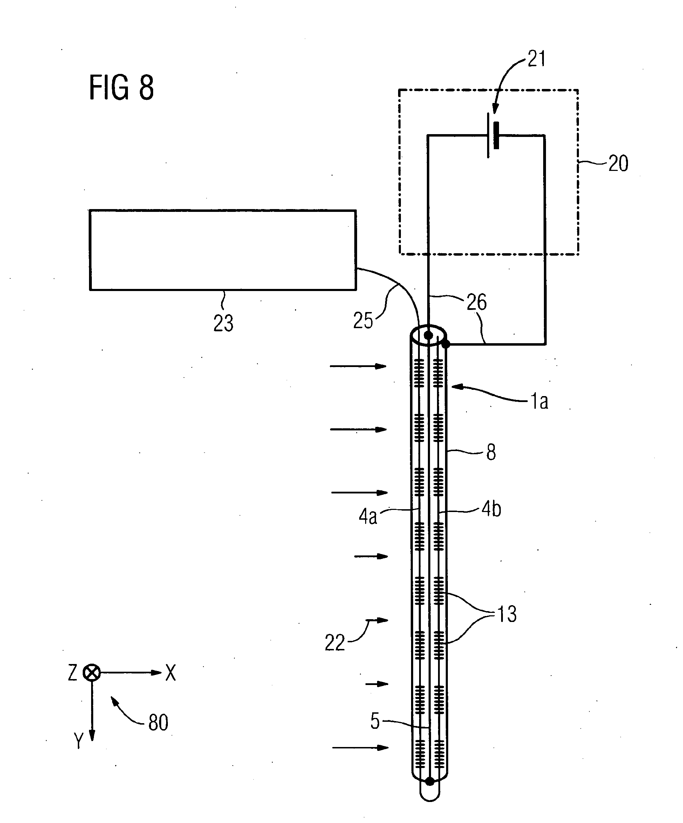

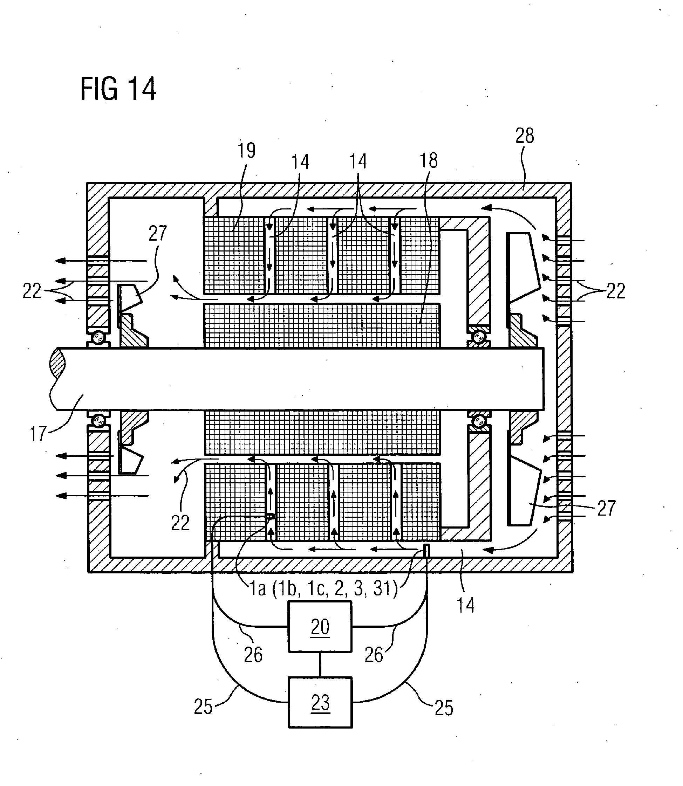

Figur 1 zeigt eine Seitenansicht eines Messelements 1a, 1b, 1c, 2, 3 oder 31 der erfindungsgemäßen Strömungsmessvorrichtung mit einer an einem Ende des Messelements 1a, 1b, 1c, 2, 3 oder 31 angebrachten Steckverbindung 15 zum Anschluss des Messelements 1a, 1b, 1c, 2, 3 oder 31 an eine Steuerungseinheit 20 und eine Auswerteeinheit 23 (siehe Figuren 8 bis 12 und Figur 14). Das Messelement 1a, 1b, 1c, 2, 3 oder 31 ist stabförmig ausgebildet. Zudem kann das Messelement 1a, 1b, 1c, 2, 3 oder 31 elastisch ausgeführt sein, so dass die geometrische Form den vorgegebenen Anforderungen angepasst werden kann.

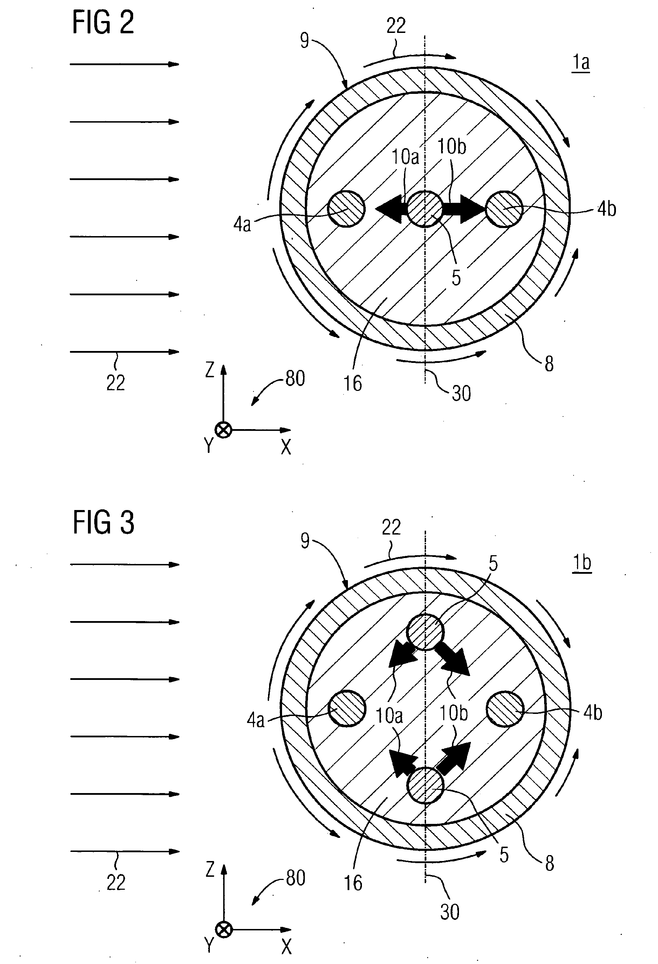

In den Figuren 2 bis 13 ist jeweils ein Koordinatensystem 80 mit einer x-, y- und z-Achse zur besseren Übersicht zugeordnet. Der Einfachheit halber und nicht einschränkend wird angenommen, dass das zu untersuchende Fluid 22 in x-Richtung strömt. Das in x-Richtung strömende Fluid 22 ist dabei durch in x-Richtung weisende Pfeile angedeutet. Das Fluid 22, welches in x-Richtung strömt und auf das sich in y-Richtung erstreckende Messelement 1a, 1b, 1c, 2, 3 oder 31 trifft, umströmt dieses. Bei der Fluidströmung handelt es sich insbesondere um eine turbulente Strömung. Es stellen sich unterschiedliche Strömungsgeschwindigkeiten auf der Oberfläche 9 des Messelementes 1a, 1b, 1c, 2, 3 oder 31 ein. Die Länge der Pfeile gibt dabei den Betrag der Fluidgeschwindigkeit am gezeichneten Ort wieder. Während die Geschwindigkeiten an demjenigen Teil der Messelementoberfläche 9, der im Wesentlichen entgegen der Strömungsrichtung gerichtet ist, am höchsten ist, ist sie an demjenigen Teil der Messelementoberfläche 9, der im Wesentlichen in Strömungsrichtung weist, am geringsten. Der Wärmetransport durch die Messelementoberfläche 9 erfolgt dabei abhängig von der lokalen Strömungsgeschwindigkeit inhomogen. So ist der Wärmetransport an demjenigen Teil der Messelementoberfläche 9, der im Wesentlichen entgegen der Strömungsrichtung gerichtet ist, größer als an demjenigen Teil der Messelementoberfläche 9, der im Wesentlichen in Strömungsrichtung weist. Befindet sich das Messelement 1a, 1b, 1c, 2, 3 oder 31, das mindestens ein Heizelement 5, 6 oder 7 beispielsweise im Zentrum der Querschnittsfläche des Messelements 1a, 1b, 1c, 2, 3 oder 31 aufweist, zumindest bezüglich seines Querschnitts in einem thermischen Gleichgewicht, während es mittels des mindestens einen Heizelements 5, 6 oder 7 mit Wärme beaufschlagt wird, wird ein an oder näher an demjenigen Teil der Messelementoberfläche 9, der im Wesentlichen entgegen der Strömungsrichtung gerichtet ist, angeordneter Lichtwellenleiter 4a eine niedrigere Temperatur aufweisen, als ein an oder näher an demjenigen Teil der Messelementoberfläche 9, der im Wesentlichen in Strömungsrichtung weist, angeordneter Lichtwellenleiter 4b. Der an oder näher an demjenigen Teil der Messelementoberfläche 9, der im Wesentlichen entgegen der Strömungsrichtung gerichtet ist, angeordnete Lichtwellenleiter 4a ist einem geringeren Wärmestrom 10a aus Richtung des mindestens einen Heizelements 5, 6 oder 7 ausgesetzt als ein an oder näher an demjenigen Teil der Messelementoberfläche 9, der im Wesentlichen in Strömungsrichtung weist, angeordneter Lichtwellenleiter 4b. Der diesem Lichtwellenleiter 4b zugeordnete Wärmestrom ist mit 10b gekennzeichnet. Die ausgehend von dem mindestens einen Heizelement 5, 6 oder 7 in Richtung der jeweiligen Lichtwellenleiter 4a, 4b weisenden Pfeile deuten dabei den entsprechenden Wärmestrom 10a, 10b an, dessen Betrag sich in der jeweiligen Pfeillänge widerspiegelt.

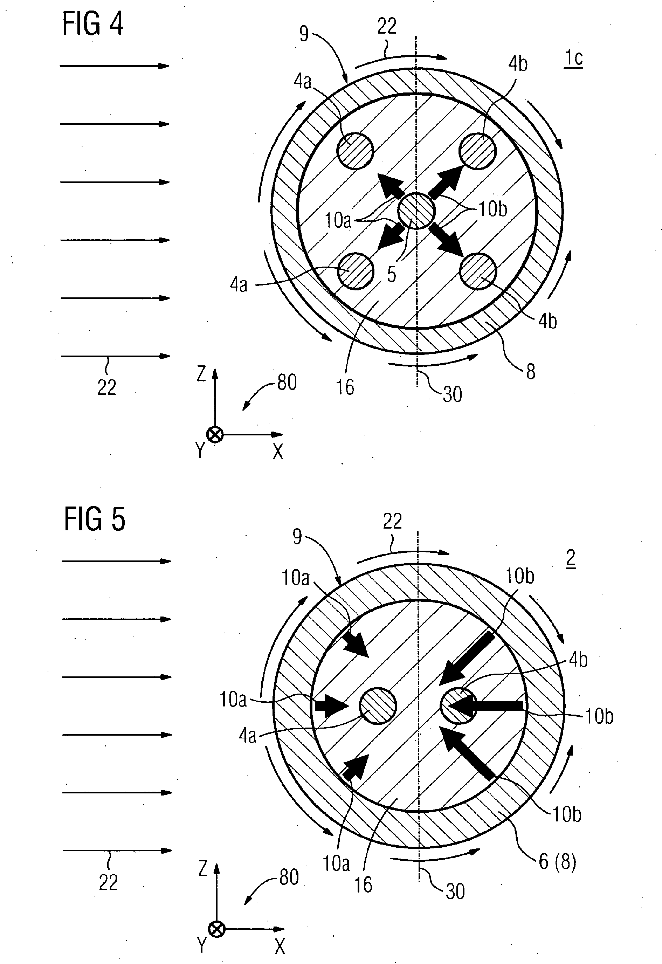

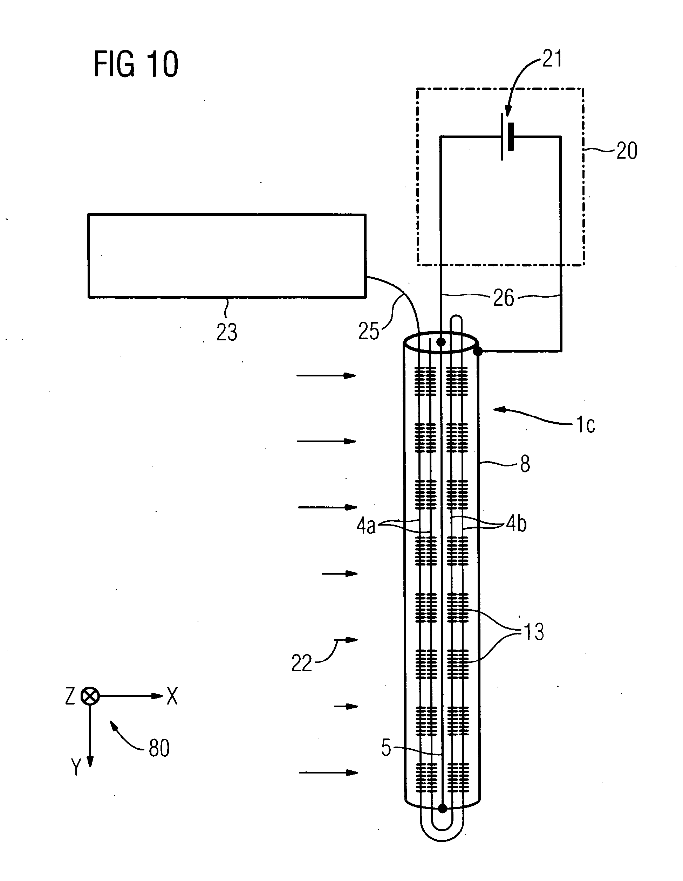

Figur 2, Figur 3 und Figur 4 zeigen drei Ausgestaltungen eines Messelements 1a, 1b bzw. 1c der erfindungsgemäßen Strömungsmessvorrichtung. Gemäß dem Ausführungsbeispiel in Figur 2 sind zwei Lichtwellenleiter 4a, 4b und ein dazwischen angeordnetes Heizelement 5 in einem keramischen Werkstoff eingebettet im Messelement 1a enthalten. Gemäß dem Ausführungsbeispiel in Figur 3 sind zwei Lichtwellenleiter 4a, 4b und zwei dazwischen angeordnetes Heizelemente 5 in dem keramischen Werkstoff eingebettet im Messelement 1b enthalten. In den jeweiligen Figuren 2 und 3 ist ein Lichtwellenleiter 4a nahe demjenigen Teil der Messelementoberfläche 9, der im Wesentlichen entgegen der Strömungsrichtung gerichtet ist, angeordnet, während der andere Lichtwellenleiter 4b nahe demjenigen Teil der Messelementoberfläche 9, der im Wesentlichen in Strömungsrichtung gerichtet ist, positioniert ist. Das eine Heizelement 5 in Figur 2 und beiden Heizelemente 5 in Figur 3 sind auf einer Symmetrieachse 30 des Messelements 1a bzw. 1b, welche gleichzeitig die Spiegelachse bezüglich beider Lichtwellenleiter 4a, 4b darstellt, derart angeordnet, dass deren jeweilige Abstände zu den beiden Lichtwellenleitern 4a, 4b einander entsprechen. Gemäß dem Ausführungsbeispiel in Figur 4 sind vier Lichtwellenleiter 4a, 4b und ein dazwischen angeordnetes Heizelemente 5 in dem keramischen Werkstoff eingebettet im Messelement 1c enthalten. Die vier Lichtwellenleiter 4a, 4b sind paarweise nahe demjenigen Teil der Messelementoberfläche 9, der im Wesentlichen entgegen der Strömungsrichtung gerichtet ist, bzw. nahe demjenigen Teil der Messelementoberfläche 9, der im Wesentlichen in Strömungsrichtung gerichtet ist, angeordnet. Das Heizelement 5 ist auf einer Symmetrieachse 30 des Messelements 1c, welche gleichzeitig die Spiegelachse bezüglich der Lichtwellenleiterpaare 4a, 4b darstellt, derart angeordnet, dass dessen Abstände zu den jeweiligen Lichtwellenleitern 4a, 4b einander entsprechen. Die Lichtwellenleiter 4a, 4b sind beispielsweise Glas- oder Kunststofffasern. Das mindestens eine Heizelement 5 und die Lichtwellenleiter 4a, 4b sind in einem aus keramischem Werkstoff bestehenden insbesondere zylindrischen Körper 16 eingebettet, der seinerseits von einer passivierenden Ummantelung 8 umgeben ist. Das eine (vgl. Figuren 2 und 4) bzw. die beiden (vgl. Figur 3) Heizelemente 5 sind beispielsweise als Heizdrähte ausgebildet. Die Ummantelung 8 kann in einer Ausführungsform zudem elektrisch leitend aus einem Metall ausgebildet sein (vgl. Figuren 8 und 10).

Figur 5 zeigt eine weitere Ausgestaltung eines Messelements 2 der erfindungsgemäßen Strömungsmessvorrichtung mit zwei Lichtwellenleitern 4a und 4b, die von einem aus keramischem Werkstoff bestehenden insbesondere zylindrischen Körper 16 umgeben sind. Ein Lichtwellenleiter 4a ist nahe demjenigen Teil der Messelementoberfläche 9, der im Wesentlichen entgegen der Strömungsrichtung gerichtet ist, angeordnet, während der andere Lichtwellenleiter 4b nahe demjenigen Teil der Messelementoberfläche 9, der im Wesentlichen in Strömungsrichtung gerichtet ist, positioniert ist. Um den keramischen Körper 16 ist ein Heizelement 6 derart angeordnet, dass es das Messelement 2 umgibt. Insbesondere bildet das Heizelement 6 zugleich eine hülsenförmige Ummantelung 8 des Messelements 2 aus.

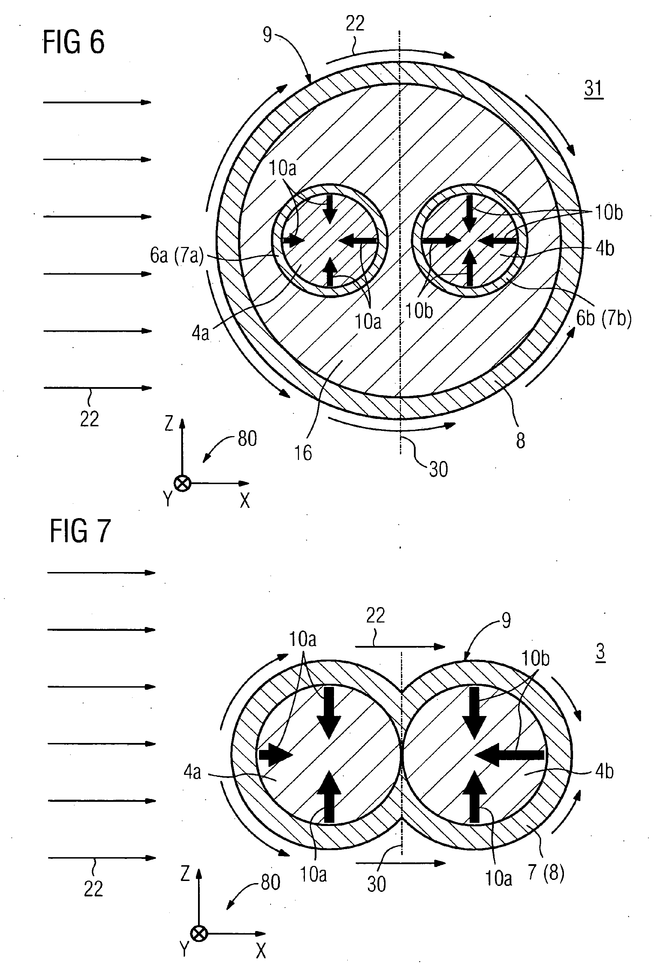

Figur 6 stellt eine weitere Ausgestaltung eines Messelements 31 der erfindungsgemäßen Strömungsmessvorrichtung mit zwei Lichtwellenleitern 4a und 4b dar. Jeder Lichtwellenleiter 4a, 4b ist von einem entsprechende Heizelement 6a, 6b oder 7a, 7b in Form einer Hülse 6a, 6b oder einer Beschichtung 7a, 7b umgeben. Die Heizelemente 6a, 6b oder 7a, 7b sind wiederum von einem aus keramischem Werkstoff bestehenden insbesondere zylindrischen Körper 16 umgeben sind. Ein Lichtwellenleiter 4a mit zugeordnetem Heizelement 6a oder 7a sind nahe demjenigen Teil der Messelementoberfläche 9, der im Wesentlichen entgegen der Strömungsrichtung gerichtet ist, angeordnet, während der andere Lichtwellenleiter 4b mit zugeordnetem Heizelement 6b oder 7b nahe demjenigen Teil der Messelementoberfläche 9, der im Wesentlichen in Strömungsrichtung gerichtet ist, positioniert sind. Der keramische Körper 16 selbst ist wiederum von einer hülsenförmigen passivierenden Ummantelung 8 des Messelements 31 umgeben.

In Figur 7 ist ein Schnitt durch ein Messelement 3 der erfindungsgemäßen Strömungsmessvorrichtung dargestellt, wobei zwei aneinander anliegende Lichtwellenleiter 4a, 4b mit einer Metallschichten 7a, 7b bedampft sind, welche zugleich ein Heizelement 7 des Messelements 3 darstellt. Die Metallschicht 7 bildet eine gemeinsame Ummantelung 8 der Lichtwellenleiter 4a, 4b aus. Diese Ausgestaltung zeichnet sich durch eine Elastizität aus, so dass das Messelement 3 in seiner räumlichen Ausdehnung bedarfsgerecht angepasst werden kann. Zudem zeichnet sich das Messelement 3 durch ein besonders einfaches Herstellverfahren aus, in dem das Lichtwellenleiterpaar 4a, 4b in einem Beschichtungsprozess konventioneller, bekannter Art mit einem geeigneten elektrisch leitfähigen Material beschichtet wird. Die Ausgestaltung zeichnet sich weiter dadurch aus, dass sie eine besonders geringe Wärmekapazität gegenüber den Ausführungsbeispielen des Messelements 1a, 1b, 1c, 2 oder 31 gemäß der Figuren 1 bis 6 aufweist und somit schneller auf sich ändernde Strömungsverhältnisse reagiert.

Die in den vorgenannten Ausgestaltungen verwendeten Heizelemente 5, 6 und 7 sind vorzugsweise aus einem Metall gebildet oder aus einer Metalllegierung. In Abhängigkeit von der physikalischen und/oder chemischen Beanspruchung können beispielsweise Stahl, Kupfer, Aluminium, Bronze, Konstantan oder dergleichen verwendet werden. Für Hochtemperaturanwendungen beispielsweise im Strömungskanal einer Gasturbine ist eine Beschichtung mit einem Metall wie Wolfram oder dergleichen vorzuziehen. Für Anwendungen bei niedrigen Temperaturen in einer chemisch aggressiven Umgebung können beispielsweise auch leitfähige Polymere eingesetzt werden. In den hier dargestellten Ausführungsbeispielen weist das Material der Heizelemente 5, 6 und 7 jeweils einen konstanten elektrischen Widerstand auf. Insbesondere ist der Widerstand im Betriebstemperaturbereich weitgehend unabhängig von der Temperatur. Eine Beaufschlagung des Heizelements 5, 6 und 7 mit einem konstanten Strom bzw. mit einem Wechselstrom mit konstantem Effektivwert führt somit zu einer über die Länge der Heizelemente 5, 6 und 7 gleichmäßigen Leistungszuführung, so dass das entsprechende Heizelement 5, 6 oder 7 über die Längserstreckung des jeweiligen Messelements 1a, 1b, 1c, 2, 3 oder 31 gleichmäßig mit Wärme beaufschlagt wird.

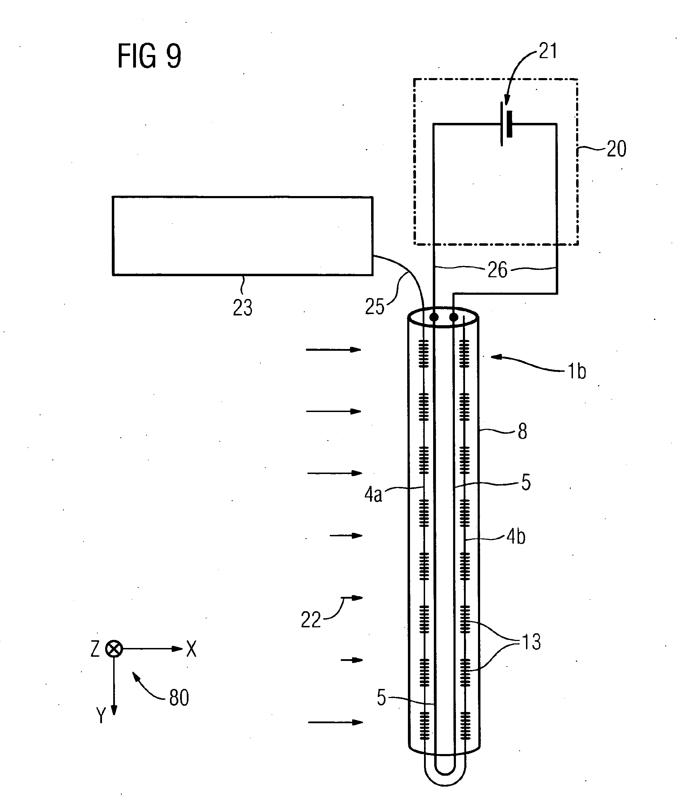

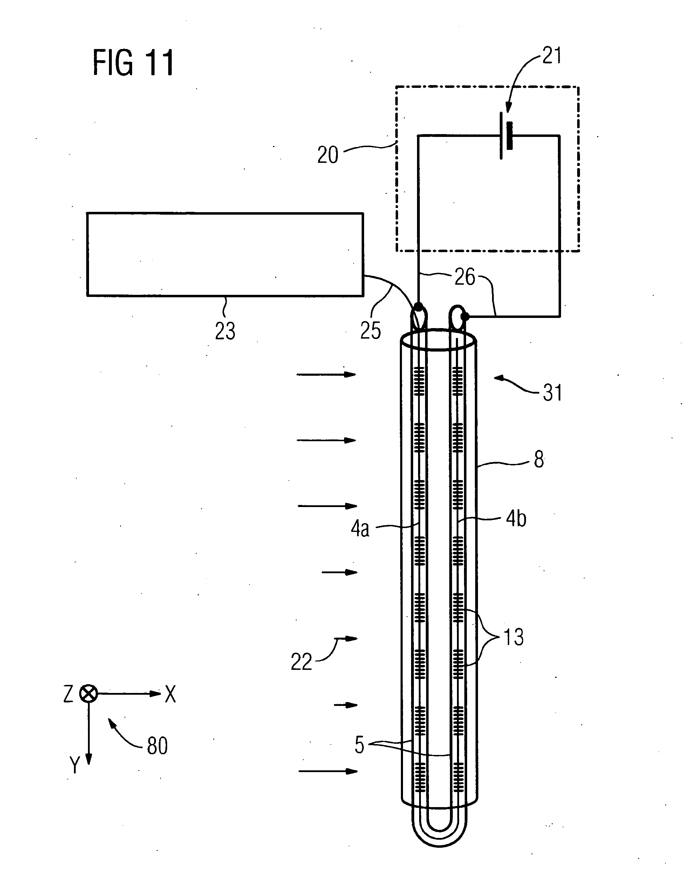

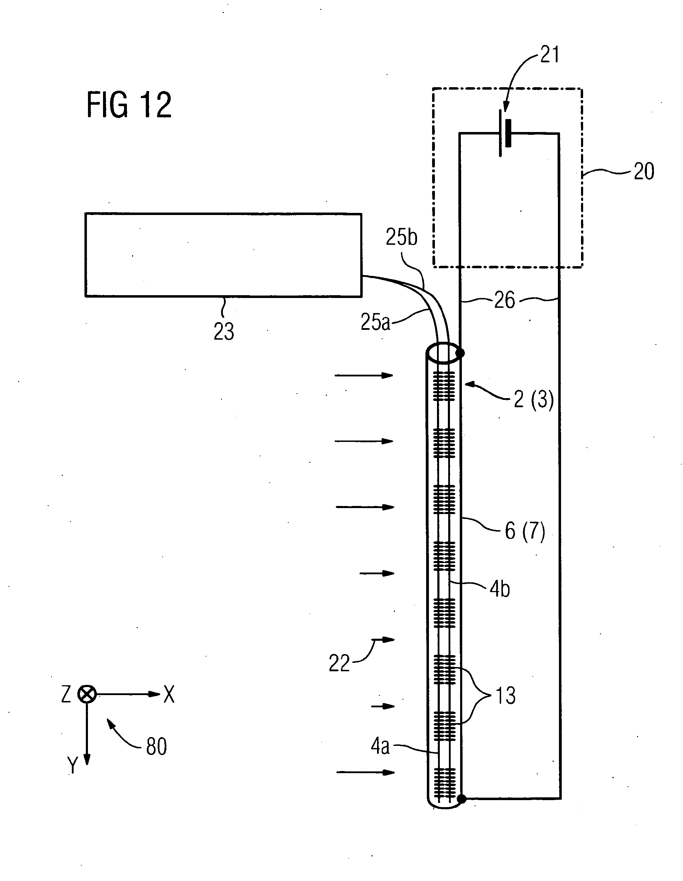

Die Figuren 8 bis 12 zeigen Ausführungsbeispiele der erfindungsgemäße Strömungsmessvorrichtung in Prinzipschaltbildern. Die Strömungsmessvorrichtung in Figur 8 umfasst dabei das Messelement 1a gemäß Figur 2, die Strömungsmessvorrichtung in Figur 9 umfasst das Messelement 1b gemäß Figur 3, die Strömungsmessvorrichtung in Figur 10 umfasst das Messelement 1c gemäß Figur 4, die Strömungsmessvorrichtung in Figur 11 umfasst das Messelement 31 gemäß Figur 6 und die Strömungsmessvorrichtung in Figur 12 umfasst das Messelement 2 oder 3 gemäß Figur 5 bzw. Figur 7. Alle genannten Ausführungsbeispiele der erfindungsgemäße Strömungsmessvorrichtung weisen weiter eine Steuerungseinheit 20 und eine Auswerteeinheit 23 auf. Das jeweilige Messelement 1a, 1b, 1c, 2, 3 oder 31 erstreckt sich in seiner Längsachse in y-Richtung. Das Messelement 2 oder 3 der Strömungsmessvorrichtung gemäß der Figur 12 ist an seinen jeweiligen Enden mit seinem Heizelement 6 oder 7 elektrisch mit der Steuerungseinheit 20 und an einem der beiden Enden optisch mit der Auswerteeinheit 23 verbunden. Hierbei sind die beiden Lichtwellenleiter 4a und 4b gemeinsam über jeweils eine optische Verbindungsfaser 25a, 25b mit der Auswerteeinheit 23 verbunden. Das Messelement 1a, 1b, 1c oder 31 der Strömungsmessvorrichtung gemäß der Figuren 8 bis 11 ist an einem Ende elektrisch mit der Steuerungseinheit 20 und optisch mit der Auswerteeinheit 23 verbunden, während das andere Ende des Messelements 1 frei verfügbar ist. Hiermit kann eine besonders einfache Montage und/oder Handhabung des Messelements 1a, 1b, 1c oder 31 erreicht werden. Einer der Lichtwellenleiter 4a, 4b des Messelements 1a, 1b, 1c oder 31 ist über eine optische Verbindungsfaser 25 mit der Auswerteeinheit 23 verbunden, wobei die Lichtwellenleiter 4a, 4b untereinander in Serie miteinander verbunden sind. Die einzelnen Lichtwellenleiter 4a, 4b können aber auch analog zu Figur 12 einzeln mit der Auswerteeinheit 23 verbunden sein, ohne dass untereinander eine Verbindung bestehen muss.

Die Steuerungseinheit 20 weist eine elektrische Energiequelle 21 auf. Die Energiequelle 21, welche zwei Anschlüsse aufweist, ist gemäß der Ausführungsbeispiele derart mit dem Heizelemente 5, 6 oder 7 verbunden, dass das Heizelement 5, 6 oder 7 mit elektrischer Leistung beaufschlagt wird und Wärme erzeugt. Die elektrische Energiequelle 21 ist insbesondere eine Stromquelle, über die ein konstanter Gleichstrom vorgebbar ist.

Das Messelement 1a, 1b, 1c, 2, 3 oder 31 wird von dem Fluid 22 umströmt, wobei die Fluidströmung entlang der Längserstreckung des Messelements 1a, 1b, 1c, 2, 3 oder 31 eine unterschiedliche Strömungsgeschwindigkeit aufweisen kann, angedeutet durch die unterschiedlich langen Pfeile. Die Strömungsrichtung des Fluids 22 weist der Einfachheit halber, wie bereits zuvor angegeben, in x-Richtung. Für eine Messung der Strömungsrichtung des Fluids 22 wird das Heizelement 5, 6 oder 7 des Messelements 1a, 1b, 1c, 2, 3 bzw. 31 mit elektrischer Leistung beaufschlagt, so dass sich dieses erwärmt. Der Heizvorgang sollte dabei mindestens solange dauern, bis sich ein thermisches Gleichgewicht im Messelement 1a, 1b, 1c, 2, 3 oder 31 eingestellt hat. Er kann aber auch kürzer gewählt werden.

Mittels der Auswerteeinheit 23, welche eine Lichtquelle, einen Detektor und ein Analysemittel aufweist, wird Licht, in Form eines kontinuierlichen Laserstrahls oder in Form von Laserimpulsen, über die optische Verbindungsfaser 25 in die Lichtwellenleiter 4a, 4b des Messelements 1a, 1b, 1c, 2, 3 oder 31 eingekoppelt und rückgestreutes Licht mit dem Analysemittel analysiert. Für die Messung wird der Effekt ausgenutzt, dass eine elektromagnetische Welle, die in einen Lichtwellenleiter 4a, 4b eingekoppelt wird, beim Durchlauf durch den Lichtwellenleiter 4a, 4b gestreut wird. Ein Teil des gestreuten Lichts wird in die Gegenrichtung gestreut, so dass es am Eingang des Lichtwellenleiters 4a, 4b erfasst werden kann. Durch die Temperaturabhängigkeit dieses Streueffekts lässt sich auf die Temperatur des Lichtwellenleiters 4a, 4b schließen. Das zurückgestreute Lichtsignal besteht aus unterschiedlichen Komponenten, die hinsichtlich der Messanforderungen unterschiedlich geeignet sind. Beispielsweise enthält das zurückgestreute Signal einen Raman-gestreuten Anteil. Mit der Faser-Bragg-Gitter-Technologie ist im Vergleich zur Raman-Technologie eine höhere Ortsauflösung erreichbar, die insbesondere für den Einsatz der Temperaturmessung in Maschinen vorzuziehen ist.

Das Laserlicht wird auf bekannte Weise mit Geräten des Stands der Technik erzeugt. In Abhängigkeit von der Temperatur wird ein Teil des Laserlichts in den Lichtwellenleitern 4a, 4b von Faser-Bragg-Gittern 13 zurückgestreut. Dieses zurückgestreute Lichtsignal wird über die optische Verbindungsfaser 25 der Auswerteeinheit 23 zugeführt, die daraus die Temperatur am Ort der Faser-Bragg-Gitter 13 im Lichtwellenleiters 4 ermittelt.

Mittels der Auswerteeinheit 23 werden die entsprechende den einzelnen Lichtwellenleitern 4a, 4b zugeordneten Temperaturen innerhalb des Messelements 1a, 1b, 1c, 2, 3 oder 31 ermittelt. Abhängig von der relativen Lage des jeweiligen Lichtwellenleiters 4a, 4b stellen sich in einem strömenden Fluid 22 mit gerichteter Strömung unterschiedliche Temperaturen am Ort der Lichtwellenleiter 4a, 4b im Messelement 1, 2 oder 3 ein. Mittels der Auswerteeinheit 23 werden die verschiedenen Temperaturen miteinander verglichen, beispielsweise durch Differenzbildung in einer der Auswerteeinheit 23 zugeordneten Rechnereinheit, und hieraus die die Strömungsrichtung des Fluids 22 ermittelt.

Weist das Messelement 1a, 1b, 1c, 2, 3 oder 31 mehrere Faser-Bragg-Gitter 13 entlang der Lichtwellenleiter 4a, 4b auf, wie in den Ausführungsbeispielen in Figur 8 bis Figur 12 angedeutet, kann aus der Temperaturverteilung entlang des Messelements 1a, 1b, 1c, 2, 3 oder 31 die Strömungsgeschwindigkeit mit der Strömungsgeschwindigkeitsverteilung des Fluids 22 bestimmt werden.

Im Ausführungsbeispiel der erfindungsgemäßen Strömungsmessvorrichtung nach Figur 8 weist das Messelement 1a ein beispielsweise als Heizdraht ausgebildetes Heizelement 5 auf. Die Energiequelle 21 ist mit einem Anschluss mit dem Heizelement 5 und mit dem anderen Anschluss mit der elektrisch leitfähigen Ummantelung 8 des Messelements 1a verbunden. Das Heizelement 5 ist dabei am gegenüberliegenden Ende des Messelements 1a ebenfalls mit der elektrisch leitenden Ummantelung 8 verbunden.

Im Ausführungsbeispiel der erfindungsgemäßen Strömungsmessvorrichtung nach Figur 9 weist das Messelement 1b zwei parallele beispielsweise als Heizdrähte ausgebildete Heizelemente 5 auf, wobei die beiden Heizdrähte an einem Ende des Messelements 1b mit einem elektrischen Verbindungsleiter zusammengeschlossen sind. Am anderen Ende des Messelements 1b sind dabei eines der beiden Heizelemente 5 mit einem Anschluss der Energiequelle 21 und das andere Heizelement 5 mit dem anderen Anschluss der Energiequelle 21 verbunden. Ebenso sind an einem Ende des Messelements 1b die beiden parallel verlaufenden Lichtwellenleiter 4a, 4b mit einer optischen Verbindungsfaser miteinander verbunden, während am anderen Ende Messelements 1b nur einer der beiden Lichtwellenleiter 4a, 4b über eine optische Verbindungsfaser 25 an die Auswerteeinheit 23 angeschlossen ist.

Im Ausführungsbeispiel der erfindungsgemäßen Strömungsmessvorrichtung nach Figur 10 weist das Messelement 1 insgesamt vier parallele Lichtwellenleiter 4a, 4b auf. Zwischen den Lichtwellenleitern ist ein als Heizdraht ausgebildetes Heizelemente 5 angeordnet. Die Energiequelle 21 ist mit einem Anschluss mit dem Heizelement 5 und mit dem anderen Anschluss mit der elektrisch leitfähigen Ummantelung 8 des Messelements 1c verbunden. Das Heizelement 5 ist dabei am gegenüberliegenden Ende des Messelements 1c ebenfalls mit der elektrisch leitenden Ummantelung 8 verbunden. Die vier Lichtwellenleiter 4a, 4b sind mittels optischer Verbindungsfasern an den Messelementenden in Serie miteinander verbunden, so dass lediglich einer der Lichtwellenleiter 4a, 4b direkt an der Auswerteeinheit 23 angeschlossen ist. Die Verwendung eines derartigen Messelements 1c mit zahlreichen Lichtwellenleitern 4a, 4b, die beispielsweise kreisförmig um das im Querschnittszentrum des Messelements 1c angeordnete Heizelement 5 angeordnet sind, ermöglicht eine noch genaueren Bestimmung der Strömungsrichtung des Fluids 22.

Im Ausführungsbeispiel der erfindungsgemäßen Strömungsmessvorrichtung nach Figur 11 weist das Messelement 31 zwei parallele beispielsweise als elektrisch leitende Hülsen oder Beschichtungen ausgebildete Heizelemente 5 auf, die beiden an einem Ende des Messelements 31 zusammengeschlossen sind. Am anderen Ende des Messelements 31 sind dabei eines der beiden Heizelemente 5 mit einem Anschluss der Energiequelle 21 und das andere Heizelement 5 mit dem anderen Anschluss der Energiequelle 21 verbunden. Ebenso sind an einem Ende des Messelements 1b die beiden parallel verlaufenden Lichtwellenleiter 4a, 4b mit einer optischen Verbindungsfaser miteinander verbunden, während am anderen Ende Messelements 1b nur einer der beiden Lichtwellenleiter 4a, 4b über eine optische Verbindungsfaser 25 an die Auswerteeinheit 23 angeschlossen ist.

Es ist aber auch denkbar, analog zu Figur 8 und Figur 10, die beiden Heizelemente 5 aus Figur 9 und Figur 11 an einem Ende zusammen mit der Ummantelung 8, die in diesem Fall elektrisch leitend ausgeführt ist, gemeinsam zu verbinden, so dass die Energiequelle 21 am anderen Ende des Messelements 1b bzw. 31 ebenfalls an die Ummantelung 8 angeschlossen werden kann. Bei diesem nicht dargestellten Ausgestaltungsbeispiel müssen beide Heizelemente 5 gemeinsam mit ein und demselben Anschluss der Energiequelle 21 verbindbar sein.

Im Ausführungsbeispiel der erfindungsgemäßen Strömungsmessvorrichtung nach Figur 12 ist ein Anschluss der Energiequelle 21 an einem Ende des Messelementes 2 oder 3 mit dem als elektrisch leitende Hülse 8 (Figur 5) oder als elektrisch leitende Beschichtung (Figur 7) ausgebildeten Heizelement 6 oder 7 verbunden. Der zweite Anschluss der Energiequelle 21 ist am anderen Ende des Messelementes 2 oder 3 mittels einer elektrischen Leitung mit dem Heizelement 6 oder 7 verbunden.

Figur 9 zeigt einen runden Querschnitt eines Strömungskanals 14, durch welchen ein Fluid 22 in x-Richtung strömt. Der Strömungskanal 14 ist dabei als Beispiel mit zwei bezüglich des Strömungskanalquerschnitts radial angeordneten Messelementen 1a, 1b, 1c, 2, 3 oder 31 versehen. Die beiden Messelemente 1a, 1b, 1c, 2, 3 oder 31 sind über eine elektrische Verbindungsleitung 26 mit der Steuerungseinheit 20 und über eine optische Verbindungsfaser 25 mit der Auswerteeinheit 23 verbunden.

In Figur 10 ist ein Generator als elektrische Maschine schematisch dargestellt. Der Generator weist einen mit einem Gehäuse 28 fest verbundenen feststehenden Stator 19 und einen auf einer Rotorwelle 17 beweglich gelagerten Läufer 18 auf. Der Generator wird mittels einer Kühleinrichtung mit beispielsweise Luft als kühlendes Fluid 22 gekühlt. Die Kühleinrichtung weist hierfür zwei Lüfter 27 auf, die mittels eines Leitungssystems die Kühlluft 22 durch den Generator leiten. Das Leitungssystem weist hierfür zahlreiche Strömungskanäle, insbesondere auch im Stator 19, auf. Die Kühlluft 22 wird im dargestellten Ausführungsbeispiel von außen nach innen in Richtung Läufer 18 durch den Stator 19 geleitet und weiter durch einen zwischen Stator 19 und Läufer 18 angeordneten Spalt nach außen transportiert. Gleichzeitig kann jedoch vom Rotor des Generators Luft 22 angesaugt und von innen nach auβen in umgekehrte Richtung durch den Stator 19 gepresst werden. Wenn sich beide Luftströme ungünstig überlagern, kommt es innerhalb des Leitungssystems zum Strömungsstillstand und somit gegebenenfalls zu einer örtlichen Überhitzung und Beschädigung des Generators. Um dies zu vermeiden, wird mittels der erfindungsgemäßen Strömungsmessvorrichtung die Strömungsrichtung in den Strömungskanälen überwacht. In diesem Ausführungsbeispiel sind als Beispiel an zwei Stellen des Generators zwei Strömungskanäle mit jeweils einem Messelement 1a, 1b, 1c, 2, 3 oder 31 der erfindungsgemäßen Strömungsmessvorrichtung versehen. Beide Messelemente 1a, 1b, 1c, 2, 3 oder 31 sind dabei mit der zugehörigen Steuerungseinheit 20 und Auswerteeinheit 23 verbunden. Bei Unregelmäßigkeiten in der Kühlluftströmung ist somit die Möglichkeit gegeben, zeitnah zu reagieren und geeignete Schutzmassnahmen einzuleiten.

Der Einsatz der erfindungsgemäßen Strömungsmessvorrichtung in einem luftgekühlten Generator dient hier nur als Beispiel. Es ist auch möglich die erfindungsgemäßen Strömungsmessvorrichtung in elektrischen Maschinen zu Verwenden, die mit H₂-Gas einem Edelgas oder einem beliebigen anderen Gas als Fluid 22 gekühlt werden. Als kühlendes Fluids 22 kann auch eine Kühlflüssigkeit, wie Wasser oder auch bei kryogener Kühlung ein flüssiges Edelgas oder flüssiger Stickstoff vorgesehen sein.

Die erfindungsgemäße Strömungsmessvorrichtung kann auch in einer Turbinen, wie beispielsweise einer Dampf- oder einer Gasturbinen, eingesetzt werde. So können mittels der erfindungsgemäßen Strömungsmessvorrichtung Strömungsrichtungen insbesondere in turbulenten Strömungsbereichen im zugeordneten Kühlluftsystem, im zugeordneten Kompressor, am zugeordneten Kompressoreinlass und/oder im entsprechenden Abgasstrom gemessen werden.

Die in den Figuren dargestellten Ausführungsbeispiele dienen lediglich der Erläuterung der Erfindung und sind für diese nicht beschränkend. So kann insbesondere die Art des Messelements 1a, 1b, 1c, 2, 3 oder 31 insbesondere seine geometrische Ausformung, variieren, ohne den Schutzbereich der Erfindung zu verlassen. Darüber hinaus können natürlich auch mehrere Elemente zusammengeschaltet werden, um bestimmte Änderungen der Strömungsrichtung genauer untersuchen zu können.

## Patentansprüche

1. Strömungsmessvorrichtung zur Bestimmung einer Strömungsrichtung eines Fluids (22), aufweisend
- ein von dem Fluid (22) umströmbares Messelement (1a, 1b, 1c, 2, 3, 31) mit mindestens zwei Lichtwellenleitern (4a, 4b), die jeweils zumindest ein Faser-Bragg-Gitter (13a, 13b) umfassen, und mindestens einem zu den Lichtwellenleitern (4) benachbart angeordneten elektrischen Heizelement (5, 6, 7), wobei
- die Lichtwellenleiter (4a, 4b) über jeweils einen vom mindestens einen Heizelement (5, 6, 7) zu den jeweiligen Lichtwellenleitern (4a, 4b) gerichteten Wärmestrom (10a, 10b) mit Wärme beaufschlagbar sind,
- die Richtungen der Wärmeströme (10a, 10b) zumindest anteilig entgegengesetzt sind,
- die einzelnen Wärmeströme (10a, 10b) unterschiedlich stark mit der Strömungsrichtung des Fluids (22) korreliert sind, und
- wenigstens eine in die Lichtwellenleiter (4a, 4b) einkoppelbare elektromagnetische Welle entsprechend der jeweiligen Temperatur der Lichtwellenleiter (4a, 4b) am Ort der mindestens zwei Faser-Bragg-Gitters (13a, 13b) beeinflussbar ist,
- eine Steuerungseinheit, mit welcher dem zumindest einen Heizelement (5, 6, 7) elektrische Leistung zuführbar ist, und
- eine Auswerteeinheit (23), mit welcher die von den einzelnen Wärmeströmen ausgehende Temperaturbeeinflussung der mindestens einen elektromagnetischen Welle auswertbar und die Strömungsrichtung des Fluids (22) bestimmbar ist.

2. Strömungsmessvorrichtung nach Anspruch 1, **dadurch gekennzeichnet, dass** das Messelement (1a, 1b, 1c, 2, 3, 31) stabförmig ausgebildet ist.

3. Strömungsmessvorrichtung nach Anspruch 1 oder 2, **dadurch gekennzeichnet, dass** das Messelement (1a, 1b, 1c, 2, 3, 31) elastisch ist.

4. Strömungsmessvorrichtung nach einem der Ansprüche 1 bis 3, **dadurch gekennzeichnet, dass** das mindestens eine Heizelement (5, 6, 7) aus Metall gebildet ist.

5. Strömungsmessvorrichtung nach einem der Ansprüche 1 bis 4, **dadurch gekennzeichnet, dass** das mindestens eine Heizelement (7) durch eine gemeinsame elektrisch leitfähige Beschichtung der Lichtwellenleiter (4a, 4b) gebildet ist, wobei die Lichtwellenleiter in Längsrichtung in Kontakt sind.

6. Strömungsmessvorrichtung nach einem der Ansprüche 1 bis 5, **dadurch gekennzeichnet, dass** das mindestens eine Heizelement (5, 6, 7) einen konstanten spezifischen elektrischen Widerstand aufweist.

7. Strömungsmessvorrichtung nach Anspruch 6, **dadurch gekennzeichnet, dass** der spezifische Widerstand im Betriebstemperaturbereich weitgehend temperaturunabhängig ist.

8. Strömungsmessvorrichtung nach einem der Ansprüche 1 bis 5, **gekennzeichnet durch** eine Ummantelung (8) des Messelements (1a, 1b, 1c, 2, 3, 31).

9. Strömungsmessvorrichtung nach Anspruch 8, **dadurch gekennzeichnet, dass** die Ummantelung (8) aus einem keramischen Werkstoff besteht.

10. Strömungsmessvorrichtung nach Anspruch 8, **dadurch gekennzeichnet, dass** die Ummantelung (8) durch eine Metallhülse gebildet ist.

11. Strömungsmessvorrichtung nach Anspruch 10, **dadurch gekennzeichnet, dass** die Ummantelung (8) zugleich das mindestens eine Heizelement (6, 7) aufweist.

12. Verfahren zum Bestimmen einer Strömungsrichtung eines Fluids (22) mit einer Strömungsmessvorrichtung, wobei
- mindestens eine elektromagnetische Welle in mindestens zwei Lichtwellenleiter (4a, 4b) eines vom Fluid (22) umströmten Messelements (1a, 1b, 1c, 2, 3, 31) eingekoppelt wird, wobei die Lichtwellenleiter (4a, 4b) jeweils mindestens ein Faser-Bragg-Gitter (13a, 13b) umfassen,
- zumindest einem Heizelement (5, 6, 7) des Messelements (1a, 1b, 1c, 2, 3, 31) derart elektrischen Leistung zugeführt wird, dass
- die Lichtwellenleiter (4a, 4b) von den Heizelementen (5, 6, 7) mit Wärme beaufschlagt und
- die mindestens eine elektromagnetische Welle in Abhängigkeit von der unterschiedlichen lokalen Temperatur in den zumindest zwei Lichtwellenleitern (4a, 4b) am Ort des jeweiligen mindestens einen Faser-Bragg-Gitters (13a, 13b) unterschiedlich stark beeinflusst wird,
- die unterschiedlichen Beeinflussungen der mindestens einen elektromagnetischen Welle ermittelt und daraus die Strömungsrichtung des Fluids (22) senkrecht zur Längserstreckung des Messelements (1a, 1b, 1c, 2, 3, 31) bestimmt wird.

13. Verfahren nach Anspruch 11 oder 12, **dadurch gekennzeichnet, dass** die mindestens eine elektromagnetische Welle durch mindestens einen elektromagnetischen Impuls gebildet ist.

14. Verfahren nach einem der Ansprüche 11 bis 13, **dadurch gekennzeichnet, dass** das Messelement (1a, 1b, 1c, 2, 3, 31) in seiner Längserstreckung durch das mindestens eine Heizelement (5, 6, 7) erwärmt wird.

15. Verfahren nach einem der Ansprüche 11 bis 14, **dadurch gekennzeichnet, dass** das mindestens eine Heizelement (5, 6, 7) mit einer konstanten elektrischen Leistung beaufschlagt wird.

16. Verfahren nach einem der Ansprüche 11 bis 15, **dadurch gekennzeichnet, dass** mehrere Messungen mit unterschiedlicher Leistungsbeaufschlagung durchgeführt werden.

17. Verfahren nach einem der Ansprüche 11 bis 16, **dadurch gekennzeichnet, dass** als Fluid (22) ein Gas oder eine Flüssigkeit zur Kühlung einer elektrischen Maschine (9), insbesondere eines Generators oder eines Motors, verwendet wird.

18. Elektrische Maschine mit
- einem drehbar gelagerten Läufer (18),
- einem zugeordneten, ortsfesten Stator (19) in einem Maschinengehäuse (28),
- einer Einrichtung zur Kühlung von Teilen mittels eines Fluids (22) innerhalb des Maschinengehäuses (28), wobei die Kühleinrichtung (27, 14) ein Leitungssystem enthält, und
- einer Strömungsmessvorrichtung nach einem der Ansprüche 1 bis 11,
wobei ein in einem Strömungskanal (14) des Leitungssystems angeordnetes Messelement (1a, 1b,1c, 2, 3, 31) der Strömungsmessvorrichtung zur Messung der Strömungsrichtung des Fluids (22) im Strömungskanal (14) vorgesehen ist.

19. Elektrische Maschine nach Anspruch 18, **dadurch gekennzeichnet, dass** das Messelement (1a, 1b, 1c, 2,3, 31) radial zum Querschnitt des Strömungskanals (14) angeordnet ist.

20. Elektrische Maschine nach einem der Ansprüche 18 bis 19, **dadurch gekennzeichnet, dass** im Strömungskanal (14) axial beabstandet mehrere Messelemente (1a, 1b, 1c, 2, 3, 31) angeordnet sind.

21. Verfahren nach einem der Ansprüche 12 bis 17, **dadurch gekennzeichnet, dass** die Strömungsrichtung eines Fluids (22) in einem Kühlleitungssystem einer elektrischen Maschine nach einem der Ansprüche 18 bis 20 bestimmt wird.

## Claims

1. Flowmeter for determining a flow direction of a fluid (22), having
- a measurement element (1a, 1b, 1c, 2, 3, 31) around which the fluid (22) can flow and having at least two optical waveguides (4a, 4b), each of which comprises at least one fibre Bragg grating (13a, 13b), and having at least one electrical heating element (5, 6, 7), which is arranged adjacent to the optical waveguides (4), in which
- heat can be applied to the optical waveguides (4a, 4b) via a respective heat flow (10a, 10b), which is directed from the at least one heating element (5, 6, 7) to the respective optical waveguides (4a, 4b),
- at least a proportion of the directions of the heat flows (10a, 10b) is in opposite directions,
- the individual heat flows (10a, 10b) are correlated to different extents with the flow direction of the fluid (22),
and
- at least one electromagnetic wave, which can be injected into the optical waveguides (4a, 4b), can be influenced in accordance with the respective temperature of the optical waveguides (4a, 4b) at the location of the at least two fibre Bragg gratings (13a, 13b),
- a control unit by means of which electrical power can be supplied to the at least one heating element (5, 6, 7),
and
- an evaluation unit (23), by means of which it is possible to evaluate the temperature influence, originating from the individual heat flows, on the at least one electromagnetic wave, and to determine the flow direction of the fluid (22).

2. Flowmeter according to Claim 1, **characterized in that** the measurement element (1a, 1b, 1c, 2, 3, 31) is in the form of a rod.

3. Flowmeter according to Claim 1 or 2, **characterized in that** the measurement element (1a, 1b, 1c, 2, 3, 31) is elastic.

4. Flowmeter according to one of Claims 1 to 3, **characterized in that** the at least one heating element (5, 6, 7) is formed from metal.

5. Flowmeter according to one of Claims 1 to 4, **characterized in that** the at least one heating element (7) is formed by a common electrically conductive coating on the optical waveguides (4a, 4b), with the optical waveguides being in contact in the longitudinal direction.

6. Flowmeter according to one of Claims 1 to 5, **characterized in that** the at least one heating element (5, 6, 7) has a constant electrical resistivity.

7. Flowmeter according to Claim 6, **characterized in that** the resistivity in the operating temperature range is largely independent of temperature.

8. Flowmeter according to one of Claims 1 to 5, **characterized by** a sheath (8) for the measurement element (1a, 1b, 1c, 2, 3, 31).

9. Flowmeter according to Claim 8, **characterized in that** the sheath (8) is composed of a ceramic material.

10. Flowmeter according to Claim 8, **characterized in that** the sheath (8) is formed by a metal sleeve.

11. Flowmeter according to Claim 10, **characterized in that** the sheath (8) also has the at least one heating element (6, 7).

12. Method for determining a flow direction of a fluid (22) by means of a flowmeter, in which
- at least one electromagnetic wave is injected into at least two optical waveguides (4a, 4b) of a measurement element (1a, 1b, 1c, 2, 3, 31) around which the fluid (22) flows, the optical waveguides (4a, 4b) each comprising at least one fibre Bragg grating (13a, 13b)
- at least one heating element (5, 6, 7) for the measurement element (1a, 1b, 1c, 2, 3, 31) is supplied with electrical power such that
- heat is applied by the heating elements (5, 6, 7) to the optical waveguides (4a, 4b), and
- the at least one electromagnetic wave is influenced to a different extent as a function of the different local temperature in the at least two optical waveguides (4a, 4b) at the location of the respective at least one fibre Bragg grating (13a, 13b),
- the different influences on the at least one electromagnetic wave are determined and the flow direction of the fluid (22) at right angles to the longitudinal extent of the measurement element (1a, 1b, 1c, 2, 3, 31) is determined from this.

13. Method according to Claim 11 or 12, **characterized in that** the at least one electromagnetic wave is formed by at least one electromagnetic pulse.

14. Method according to one of Claims 11 to 13, **characterized in that** the measurement element (1a, 1b, 1c, 2, 3, 31) is heated in its longitudinal extent by the at least one heating element (5, 6, 7).

15. Method according to one of Claims 11 to 14, **characterized in that** the at least one heating element (5, 6, 7) has a constant electrical power applied to it.

16. Method according to one of Claims 11 to 15, **characterized in that** a plurality of measurements are carried out with a different power applied.

17. Method according to one of Claims 11 to 16, **characterized in that** a gas or a liquid is used as the fluid (22) for cooling an electrical machine (9), in particular a generator or a motor.

18. Electrical machine having
- a rotor (18) which is mounted such that it can rotate,
- an associated fixed-position stator (19) in a machine housing (28),
- a device for cooling parts by means of a fluid (22) within the machine housing (28), with the cooling device (27, 14) containing a line system,
and
- a flowmeter according to one of Claims 1 to 11,
with a measurement element (1a, 1b, 1c, 2, 3, 31) which is arranged in a flow channel (14) of the line system, of the flowmeter being provided in order to measure the flow direction of the fluid (22) in the flow channel (14).

19. Electrical machine according to Claim 18, **characterized in that** the measurement element (1a, 1b, 1c, 2, 3, 31) is arranged radially with respect to the cross section of the flow channel (14).

20. Electrical machine according to one of Claims 18 or 19, **characterized in that** a plurality of measurement elements (1a, 1b, 1c, 2, 3, 31) are arranged at a distance from one another axially in the flow channel (14).

21. Method according to one of Claims 12 to 17, **characterized in that** the flow direction of a fluid (22) in a cooling line system of an electrical machine is determined according to one of Claims 18 to 20.

## Revendications

1. Dispositif de mesure d'écoulement pour la détermination d'un sens d'écoulement d'un fluide ( 22 ), comportant
- un élément ( 1a, 1b, 1c, 2, 3, 31 ) de mesure pouvant être contourné par le fluide ( 22 ) et ayant au moins deux guides d'onde ( 4a, 4b ) de lumière, qui comprennent respectivement au moins un réseau de Bragg ( 13a, 13b ) à fibre et au moins un élément ( 5, 6, 7) électrique de chauffage disposé au voisinage des guides d'onde ( 4 ) de lumière, dans lequel
- les guides d'onde ( 4a, 4b ) de lumière peuvent être alimentés en chaleur par respectivement un courant ( 10a, 10b) calorifique allant d'au moins un élément ( 5, 6, 7 ) de chauffage aux guides d'onde ( 4a, 4b ) de lumière respectifs,
- les sens des courants ( 10a, 10b ) calorifiques sont opposés au moins pour une certaine proportion,
- les divers courants ( 10a, 10b ) calorifiques sont corrélés d'une manière différemment grande avec le sens d'écoulement du fluide ( 22 ),
et
- au moins une onde électromagnétique pouvant être injectée dans les guides d'onde ( 4a, 4b ) de lumière peut être influencée, en fonction de la température respective des guides d'onde ( 4a, 4b ) de lumière, à l'emplacement des au moins deux réseaux de Bragg ( 13a, 13b ) à fibre,
- une unité de commande, par laquelle de la puissance électrique peut être envoyée au au moins un élément ( 5, 6, 7 ) de chauffage, et
- une unité ( 23 ) d'exploitation, par laquelle l'influence de la température à partir des divers courants calorifiques sur la au moins une onde électromagnétique peut être exploitée et le sens d'écoulement du fluide ( 22 ) peut être déterminé.

2. Dispositif de mesure d'écoulement suivant la revendication 1, **caractérisé en ce que** l'élément ( 1a, 1b, 1c, 2, 3, 31 ) de mesure est constitué sous la forme d'un barreau.

3. Dispositif de mesure d'écoulement suivant la revendication 1 ou 2, **caractérisé en ce que** l'élément (1a, 1b, 1c, 2, 3, 31) de mesure est élastique.

4. Dispositif de mesure d'écoulement suivant l'une des revendications 1 à 3, **caractérisé en ce que** le au moins un élément ( 5, 6, 7 ) de chauffage est en métal.

5. Dispositif de mesure d'écoulement suivant l'une des revendications 1 à 4, **caractérisé en ce que** le au moins un élément ( 7 ) de chauffage est formé par un revêtement commun et conducteur d'électricité des guides d'onde ( 4a, 4b ) de lumière, les guides d'onde de lumière étant en contact dans la direction longitudinale.

6. Dispositif de mesure d'écoulement suivant l'une des revendications 1 à 5, **caractérisé en ce que** le au moins un élément ( 5, 6, 7 ) de chauffage a une résistance électrique spécifique constante.

7. Dispositif de mesure d'écoulement suivant la revendication 6, **caractérisé en ce que** la résistance spécifique est dans une grande mesure indépendante de la température dans la plage de température de fonctionnement.

8. Dispositif de mesure d'écoulement suivant l'une des revendications 1 à 5, **caractérisé par** un gainage ( 8 ) de l'élément ( 1a, 1b, 1c, 2, 3, 31 ) de mesure.

9. Dispositif de mesure d'écoulement suivant la revendication 8, **caractérisé en ce que** le gainage est en un matériau céramique.

10. Dispositif de mesure d'écoulement suivant la revendication 8, **caractérisée en ce que** le gainage ( 8 ) est formé par une douille métallique.

11. Dispositif de mesure d'écoulement suivant la revendication 10, **caractérisé en ce que** le gainage ( 8 ) comprend en même temps le au moins un élément ( 6, 7 ) de chauffage.

12. Procédé de détermination d'un sens d'écoulement d'un fluide ( 22 ) par un dispositif de mesure d'écoulement, dans lequel
- on injecte au moins une onde électromagnétique dans au moins deux guides d'onde ( 4a, 4b ) de lumière d'un élément ( 1a, 1b, 1c, 2, 3, 31 ) de mesure contourné par le fluide ( 22 ), les guides d'onde ( 4a, 4b ) de lumière comprenant respectivement au moins un réseau de Bragg ( 13a, 13b ) à fibre,
- on envoie de la puissance électrique à au moins un élément ( 5, 6, 7 ) de chauffage de l'élément ( 1a, 1b, 1c, 2, 3, 31 ) de mesure de manière à ce que
- les guides d'onde ( 4a, 4b ) de lumière soient alimentés en chaleur par les éléments ( 5, 6, 7 ) de chauffage,
- la au moins une onde électromagnétique soit influencée, d'une manière différemment forte en fonction de la température locale différente dans les au moins deux guides d'onde ( 4a, 4b ) de lumière, à l'emplacement du respectivement au moins un réseau de Bragg ( 13a, 13b ) à fibre,
- on détermine les influences différentes sur la au moins une onde électromagnétique et on en détermine le sens d'écoulement du fluide ( 22 ) perpendiculairement à l'étendue longitudinale de l'élément ( 1a, 1b, 1c, 2, 3, 31 ) de mesure.

13. Procédé suivant la revendication 11 ou 12, **caractérisé en ce qu'**on forme la au moins une onde électromagnétique par au moins une impulsion électromagnétique.

14. Procédé suivant la revendication 11 à 13, **caractérisé en ce que** l'on chauffe l'élément ( 1a, 1b, 1c, 2, 3, 31 ) de mesure dans son étendue longitudinale par le au moins un élément ( 5, 6, 7 ) de chauffage.

15. Procédé suivant l'une des revendications 11 à 14, **caractérisé en ce qu'**on alimente en une puissance électrique constante le au moins un élément ( 5, 6, 7 ) de chauffage.

16. Procédé suivant l'une des revendications 11 à 15, **caractérisé en ce qu'**on effectue plusieurs mesures avec une alimentation en puissance différente.

17. Procédé suivant l'une des revendications 11 à 16, **caractérisé en ce qu'**on utilise comme fluide ( 22 ) un gaz ou un liquide pour le refroidissement d'une machine ( 9 ) électrique, notamment d'une génératrice ou d'un moteur.

18. Machine électrique comprenant
- un rotor ( 18 ) monté tournant,
- un stator ( 19 ) associé à poste fixe dans un carter ( 28 ) de machine,
- un dispositif de refroidissement de pièces au moyen d'un fluide à l'intérieur du carter ( 28 ) de la machine, le dispositif ( 27, 14 ) de refroidissement comportant un système de conduite, et
- un dispositif de mesure d'écoulement suivant l'une des revendications 1 à 11,
dans laquelle un élément ( 1a, 1b, 1c, 2, 3, 31 ) de mesure du dispositif de mesure d'écoulement, cet élément étant disposé dans un canal ( 14 ) d'écoulement du système de conduite, est prévu pour mesurer le sens de l'écoulement du fluide ( 22 ) dans le canal ( 24 ) d'écoulement.

19. Machine électrique suivant la revendication 18, **caractérisée en ce que** l'élément ( 1a, 1b, 1c, 2, 3, 31 ) de mesure est disposé radialement à la section transversale du canal ( 14 ) d'écoulement.

20. Machine électrique suivant l'une des revendications 18 à 19, **caractérisée en ce que** plusieurs éléments ( 1a, 1b, 1c, 2, 3, 31 ) de mesure sont disposés à distance axialement dans le canal ( 14 ) d'écoulement.

21. Procédé suivant l'une des revendications 12 à 17, **caractérisé en ce que** l'on détermine le sens d'écoulement d'un fluide ( 22 ) dans un système de conduite de refroidissement une machine électrique suivant l'une des revendications 18 à 20.
